# EUROPÄISCHE PATENTSCHRIFT

(11) **EP 1 800 252 B1**
(45) Veröffentlichungstag und Bekanntmachung des Hinweises auf die Patenterteilung: **08.01.2020**
(21) Anmeldenummer: 05772004.7
(22) Anmeldetag: 02.08.2005
(51) Int. Cl.: G06K 19/07

(54) **MOBILES TELEKOMMUNIKATIONSENDGERÄT MIT RFID-FUNKTIONALITÄT SOWIE ZUGEHÖRIGES VERFAHREN**
MOBILE TELECOMMUNICATIONS TERMINAL COMPRISING RFID FUNCTIONS AND ASSOCIATED METHOD
TERMINAL DE TÉLÉCOMMUNICATION MOBILE À FONCTION RFID ET PROCÉDÉ ASSOCIÉ

(30) Priorität: 13.10.2004 EP 04024432
(43) Veröffentlichungstag der Anmeldung: 27.06.2007
(73) Patentinhaber: Unify GmbH & Co. KG, 80807 München (DE)
(72) Erfinder: JATSCHKA, Thomas, 2102 Kleinengersdorf (AT); POHL, Alfred, 2130 Mistelbach (AT); TSCHOFEN, Robert, 1140 Wien (AT); ZIMMERMANN, Gernot, 1130 Wien (AT)
(74) Vertreter: Fritzsche, Thomas
(86) Internationale Anmeldenummer: PCT/EP2005/053760
(87) Internationale Veröffentlichungsnummer: WO 2006/040202

(56) Entgegenhaltungen:
- WO-A-00/74406
- WO-A-02/49322
- GB-A- 2 306 080
- US-A1- 2003 218 532

## Beschreibung

Die vorliegende Erfindung bezieht sich auf ein mobiles Telekommunikationsendgerät mit RFID-Funktionalität sowie ein zugehöriges Verfahren und insbesondere auf ein mobiles Telekommunikationsendgerät wie beispielsweise ein Handy, mit dem ein RFID-Transponder bzw. -TAG kostengünstig und beliebig veränderbar realisiert werden kann.

RFID-Transponder (Radio Frequency IDentification) bzw. sogenannte RFID-TAGs werden vermehrt als Ersatz der sogenannten EAN-Barcodes (Europäische Artikelnummer) verwendet. Hierbei wird eine Artikelkennzeichnung bzw. werden sogenannte Kennwertdaten drahtlos auf elektromagnetische Art und Weise übertragen, wobei die Etiketten bzw. Kennwertdaten eine Vielzahl von Informationen beinhalten können. Die RFID-Technologie wird bereits in einer Vielzahl von Anwendungsgebieten verwendet, wobei neben der vorstehend beschriebenen Artikelkennzeichnung insbesondere die Realisierung von Zutrittskontrollsystemen erwähnt seien.

Üblicherweise werden derartige RFID-Transponder bzw. RFID-TAGs durch eine speziell dafür ausgebildete Steuerschaltung realisiert, die an eine entsprechende Koppelspule angeschaltet und in einem Gehäuse eingeschweisst ist. Ein von einer RFID-Leseeinheit erzeugtes Aktivierungssignal wird hierbei von der Koppelspule des RFID-Transponders aufgenommen und von der speziellen Steuerschaltung ausgewertet, wobei bei Erfassen eines gültigen Aktivierungssignals die in der Steuerschaltung abgelegten Kennwertdaten wiederum über die Koppelspule an die RFID-Leseeinheit gesendet werden. Auf diese Weise kann eine berührungslose Auswertung der RFID-Kennwertdaten erfolgen und beispielsweise ein Zugangskontrollsystem realisiert werden.

Derartige RFID-Transponder bzw. -TAGs werden üblicherweise ohne eigene Energieversorgung realisiert, wobei eine Energieversorgung aus der eingestrahlten elektromagnetischen Energie der RFID-Leseeinheit abgeleitet wird.

US 2003/0218532 A1 bezieht sich auf ein tragbares Mobiltelefon, das für Authentifizierungszwecke verwendet werden kann. Die Vorrichtung beinhaltet Mittel zum Schreiben von benutzerspezifischen Informationen in eine Speichereinheit, die in dem Transponder enthalten ist. Wenn also ein abfragendes Lesegerät den Transponder stimuliert, sendet der Transponder die benutzerspezifischen Informationen. Dies ermöglicht die Authentifizierung eines Benutzers und nicht eines Geräts.

Nachteilig ist jedoch bei derartigen herkömmlichen RFID-Transpondern, dass sie an jeweilige Benutzer ausgegeben und verteilt werden müssen, was zu einem erheblichen Mehraufwand bei der Realisierung insbesondere von Zutrittskontrollsystemen führt.

Der Erfindung liegt daher die Aufgabe zu Grunde ein mobiles Telekommunikationsendgerät mit RFID-Funktionalität sowie ein zugehöriges Verfahren zu schaffen, wodurch insbesondere in bereits existierenden Zugangskontrollsystemen eine Zugangsberechtigung sehr einfach und kostengünstig verteilt werden kann.

Erfindungsgemäß wird diese Aufgabe hinsichtlich des mobilen Telekommunikationsendgeräts durch die Merkmale des Patentanspruchs 1 und hinsichtlich des Verfahrens durch die Maßnahmen des Patentanspruchs 12 gelöst.

Insbesondere durch Verwendung einer RFID-Transponderschaltung, die unmittelbar an die ohnehin vorhandene Datenverarbeitungseinheit des mobilen Telekommunikationsendgeräts angeschaltet ist, sowie einer RFID-Speichereinheit zum Speichern eines Aktivierungssignal-Erkennungsalgorithmus zum Erkennen eines RFID-Aktivierungssignals und eines ladbaren RFID-Kennwertdaten-Übertragungsalgorithmus zum Übertragen der RFID-Kennwertdaten kann unter Verwendung der ladbaren Algorithmen die Datenverarbeitungseinheit gemeinsam mit der RFID-Transponderschaltung einen RFID-Transponder-Emulator erzeugen, der in Abhängigkeit von einem RFID-Aktivierungssignal wie ein herkömmlicher RFID-Transponder RFID-Kennwertdaten aussendet. Die Kosten hierfür sind minimal, da eine Vielzahl von in einem mobilen Telekommunikationsendgerät ohnehin vorhandenen Elementen, wie insbesondere die Datenverarbeitungseinheit, zum Realisieren der RFID-Funktionalität verwendet wird.

Vorzugsweise wird zur Realisierung der RFID-Transponderschaltung ein Anschluss einer Koppelspule an Masse gelegt, ein weiterer Anschluss der Koppelspule über einen Gleichrichter und einen Bandpass mit einem RFID-Eingang der Datenverarbeitungseinheit zum Erfassen des RFID-Aktivierungssignals verbunden, ein RFID-Ausgang (O1) der Datenverarbeitungseinheit mit einem Eingang eines Schaltelements verbunden, ein Anschluss des Schaltelements an Masse gelegt, und ein weiterer Anschluss des Schaltelements mit dem weiteren Anschluss der Koppelspule verbunden, wobei die Datenverarbeitungseinheit nach Empfang des RFID-Aktivierungssignals am RFID-Eingang die RFID-Kennwertdaten entsprechend dem RFID-Kennwertdaten-Übertragungsalgorithmus am RFID-Ausgang ausgibt. Diese Realisierungsform stellt eine besonders einfache und kostengünstige Lösung dar.

Vorzugsweise kann die RFID-Transponderschaltung ein Abstimmelement in Form eines elektrisch steuerbaren Abstimmkondensators zum Abstimmen der Koppelspule aufweisen, wobei das Abstimmelement durch einen RFID-Abstimmausgang der Datenverarbeitungseinheit ansteuerbar ist. Auf diese Weise können mit einer einzigen Koppelspule zumindest zwei oder mehrere RFID-Frequenzen realisiert bzw. unterstützt werden, wodurch sich eine außerordentlich hohe Flexibilität für die unterschiedlichsten RFID-Leseeinheiten oder -Systeme ergibt.

Vorzugsweise können der Aktivierungssignal-Erkennungsalgorithmus und der RFID-Kennwertdaten-Übertragungsalgorithmus sowie die zugehörigen RFID-Kennwertdaten in Abhängigkeit von einer Benutzereingabe über eine Telekommunikationsschnittstelle des mobilen Telekommunikationsendgeräts und das damit verbundene Kommunikationsnetzwerk von einem Dienstanbieter geladen werden. Eine Verteilung von Zugangsberechtigungen kann dadurch unter Verwendung bereits existierender Kommunikationsnetze besonders einfach und kostengünstig realisiert werden. Die ladbaren Algorithmen stellen hierbei vorzugsweise gesicherte Algorithmen dar, wodurch auch einem Sicherheitsaspekt Rechnung getragen wird.

Hinsichtlich des Verfahrens zur Steuerung eines Kommunikationssystems bestehend aus einem vorstehend beschriebenen mobilen Telekommunikationsendgerät, einer RFID-Leseeinheit, einem Kommunikationsnetzwerk, das mit dem mobilen Telekommunikationsendgerät in Verbindung steht und einer Dienstanbietereinheit, die mit dem Kommunikationsnetzwerk in Verbindung steht und die RFID-Leseeinheit verwaltet, stellt die Dienstanbietereinheit einen zur RFID-Leseeinheit passenden Aktivierungssignal-Erkennungsalgorithmus, einen RFID-Kennwertdaten-Übertragungsalgorithmus sowie entsprechende RFID-Kennwertdaten für das mobile Telekommunikationsendgerät bereit. Die Verteilung der für z.B. eine Zugangsberechtigung relevanten Daten kann demzufolge über herkömmliche Telekommunikationsnetze erfolgen, wobei das erfindungsgemäß modifizierte mobile Telekommunikationsendgerät nunmehr als RFID-Transponder-Emulator wirkt und eine entsprechende Zugangsberechtigung zu den verschiedensten Systemen oder Bereichen ermöglicht. Die Benutzerfreundlichkeit sowie Flexibilität ist hierbei außerordentlich hoch, wobei die Kosten auf Grund der Verwendung von ohnehin vorhandenen Systemelementen und einer lediglich minimalen Modifikation des Endgeräts äußerst gering sind.

Vorzugsweise kann beim Bereitstellen der RFID-Algorithmen sowie RFID-Kennwertdaten eine Vergebührung durchgeführt werden, wodurch sich auch kommerzielle Zugangskontrollsysteme problemlos realisieren lassen.

Ferner kann die Dienstanbietereinheit mit der RFID-Leseeinheit in Verbindung stehen und eine Verifizierung der gesendeten RFID-Kennwertdaten über die Telekommunikationsschnittstelle und das kommerzielle Netzwerk durchführen, wodurch sich auch sicherheitsrelevante Zugangskontrollsysteme realisiert werden können, welche eine Redundanzprüfung erfordern.

Ferner kann eine Identifikation eines Benutzers über die RFID-Transponderschaltung des mobilen Telekommunikationsendgeräts und eine Vergebührung über die Telekommunikationsschnittstelle desselben Geräts durchgeführt werden, wobei eine bereits für die Telekommunikationsschnittstelle vorhandene Vergebührungsplattform als Abrechnungsplattform auch für eine Zugangsberechtigung verwendet werden kann. Eine Effektivität sowie Benutzerfreundlichkeit eines derartigen Gerätes wird dadurch weiter verbessert.

In den weiteren Unteransprüchen sind weitere vorteilhafte Ausgestaltungen der Erfindung gekennzeichnet.

Die Erfindung wird nachstehend anhand eines Ausführungsbeispiels unter Bezugnahme auf die Zeichnung näher beschrieben.

Es zeigen:
Figur 1 eine vereinfachte Blockdarstellung eines Kommunikationssystems mit einem erfindungsgemäßen mobilen Telekommunikationsendgerät; und
Figur 2 eine vereinfachte Blockdarstellung des erfindungsgemäßen mobilen Telekommunikationsendgeräts gemäß Figur 1.

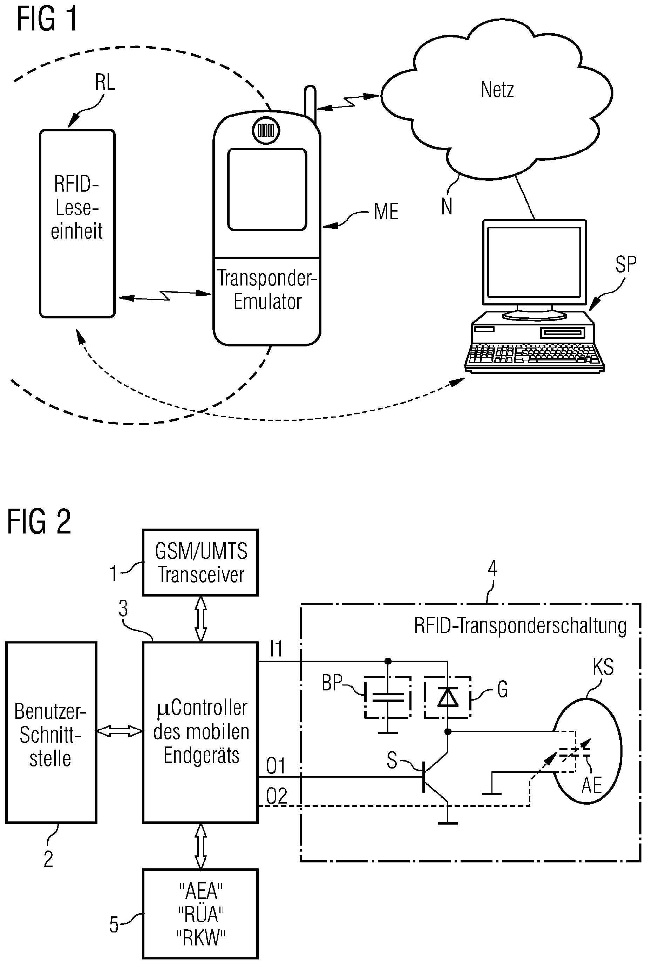

Figur 1 zeigt ein vereinfachtes Blockschaltbild eines Kommunikationssystems, in dem beispielsweise ein erfindungsgemäßes mobiles Telekommunikationsendgerät mit RFID-Funktionalität (Radio Frequency IDentification) betrieben werden kann. Das mobile Telekommunikationsendgerät ME stellt beispielsweise ein Handy, einen PDA mit Funkschnittstelle (Personal Digital Assistant) usw. dar, welches über eine Funkschnittstelle wie z.B. GSM (Global System for Mobile communication), UMTS (Universal Mobile Telecommunication System) usw. mit einem Kommunikationsnetzwerk N in Verbindung steht. Das Kommunikationsnetzwerk N kann hierbei beispielsweise ein Mobilfunk-Netzwerk darstellen, welches wiederum an ein übergeordnetes oder nebengeordnetes Netzwerk angeschaltet sein kann. Derartige nicht dargestellte Netzwerke sind beispielsweise paketorientierte Netzwerke wie das Internet oder leitungsvermittelnde bzw. -orientierte Netze wie die herkömmlichen analogen oder digitalen Festnetze (PSTN, Public Switched Telephone Network). Ferner ist an dem Kommunikationsnetzwerk N eine Dienstanbietereinheit SP (Service Provider) angeschaltet, die beispielsweise einen Server bzw. eine Datenverarbeitungseinheit aufweist und verschiedene Dienste im Kommunikationsnetzwerk N anbietet bzw. Dienstanfragen beantwortet.

Gemäß Figur 1 ist ferner eine sogenannte RFID-Leseeinheit RL vorgesehen, die in üblicher Weise RFID-Transponder bzw. RFID-TAGs aktivieren und auslesen kann. Vorzugsweise wird die RFID-Leseeinheit RL von der Dienstanbietereinheit SP verwaltet bzw. ist dieser zugeordnet, wodurch sich beispielsweise Zugangskontrollsysteme sehr einfach und kostengünstig realisieren lassen.

Die Erfindung sei nachfolgend anhand eines Zugangskontrollsystems beschrieben, wobei eine oder mehrere von RFID-Leseeinheiten RL einen Zugang zu einem vorgegebenen Bereich wie beispielsweise einem Firmengelände, einem Schigebiet, einem Theater usw. kontrolliert.

Während bisher von zentralen oder dezentralen Vergabestellen jeweilige und oftmals nur einmalig zu benutzende RFID-Transponder bzw. RFID-TAGs als Zugangsberechtigungs- bzw. Eintrittskarten verteilt werden mussten, kann bei dem erfindungsgemäßen System unter Verwendung eines herkömmlichen und nur geringfügig modifizierten mobilen Telekommunikationsendgeräts ME diese Verteilung der Zugangsberechtigung auf sehr einfache Art und Weise über ein Telekommunikationsnetzwerk erfolgen.

Wenn demzufolge ein Benutzer eine Zugangsberechtigung zu einem derartigen mit einem Zutrittskontrollsystem ausgestatteten Bereich benötigt, kann er z.B. über seine im mobilen Telekommunikationsendgerät befindliche Telekommunikationsschnittstelle und über das Kommunikationsnetz N eine Verbindung zum Dienstanbieter bzw. dessen Dienstanbietereinheit SP aufbauen und eine entsprechende Zutrittsberechtigung beantragen. In gleicher Weise kann diese Anforderung der Zugangsberechtigung auch über ein beliebiges Internet-Terminal unter Angabe einer Zieladresse für das mobile Telekommunikationsendgerät erfolgen, auf das die Daten zur Zugangsberechtigung geladen werden sollen.

Genauer gesagt kann ein Benutzer über sein mobiles Telekommunikationsendgerät ME bzw. Handy beispielsweise eine Internet-Homepage eines Dienstanbieters anwählen, der derartige Zugangsberechtigungen wie beispielsweise Theaterkarten, Schi-Tageskarten usw. anbietet und diese dort erwerben. Entgegen der üblichen Vorgehensweise, wobei die Zugangsberechtigungen bzw. z.B. Theaterkarten per normaler Post zugeschickt oder an einem zentralen Punkt hinterlegt werden, wird nunmehr erfindungsgemäß eine elektronische Zugangsberechtigung in Form eines Aktivierungssignal-Erkennungsalgorithmus, eines RFID-Kennwertdaten-Übertragungsalgorithmus und der RFID-Kennwertdaten über das Kommunikationsnetzwerk N an das mobile Telekommunikationsendgerät ME gesendet und dort unter Verwendung der ohnehin vorhandenen Funktionselemente des mobilen Telekommunikationsendgeräts ME abgespeichert. Diese Übertragung wird vorzugsweise durch eine gesicherte Übertragung realisiert, um einen unerlaubten Zugriff bzw. Manipulationen zu verhindern.

Unter Verwendung dieser im mobilen Telekommunikationsendgerät nunmehr abgespeicherten Algorithmen zum Erkennen des Aktivierungssignals und zum Übertragen der eigentlichen RFID-Kennwertdaten kann nunmehr ein hinsichtlich seines Hardwareaufbaus minimal modifiziertes mobiles Telekommunikationsendgerät ME einen Transponder-Emulator realisieren und sozusagen herkömmliche RFID-Transponder bzw. -TAGs hinsichtlich ihrer Funktionalität nachbilden. Genauer gesagt wird mittels des Aktivierungssignal-Erkennungsalgorithmus eine Datenverarbeitungseinheit des mobilen Telekommunikationsendgeräts ME in einen Zustand versetzt, mit dem sie ein an einem vorbestimmten Eingangssignal der Datenverarbeitungseinheit anliegenden RFID-Aktivierungssignals dieses zuverlässig erkennen kann. Ferner können mittels des RFID-Kennwertdaten-Übertragungsalgorithmus die ebenfalls über das Kommunikationsnetzwerk N und im mobilen Telekommunikationsendgerät ME abgelegten RFID-Kennwertdaten nach einem vorbestimmten Schema übertragen werden, der dem von der zugehörigen RFID-Leseeinheit RL erwarteten Sendeschema entspricht, wodurch die RFID-Kennwertdaten zuverlässig vom mobilen Telekommunikationsendgerät ME an die RFID-Leseeinheit RL z.B. gesendet werden können. Selbstverständlich können bei einem derartigen RFID-Übertragungsmechanismus auch Informationen von der RFID-Leseeinheit empfangen werden, wodurch beispielsweise bei einem Zugangssystem mit einer begrenzten Anzahl von Wertpunkten, diese jeweils von der RFID-Leseeinheit um einen vorbestimmten Betrag verringert werden können. In gleicher Weise sind auch andere Modifikationen der im mobilen Telekommunikationsendgerät ME abgelegten RFID-Kennwertdaten denkbar.

Erfindungsgemäß kann demzufolge durch eine Emulation der RFID-Funktion mittels eines mobilen Telekommunikationsendgeräts auf kostengünstige und äußerst flexible Weise eine RFID-Transponderfunktionalität realisiert werden.

Vorzugsweise wird beim Bereitstellen der RFID-Algorithmen sowie der RFID-Kennwertdaten eine Vergebührung durchgeführt, wobei grundsätzlich die üblicherweise im und außerhalb des Internets verwendeten Vergebührungsplattformen genutzt werden können. Vorzugsweise kann jedoch eine Vergebührung über eine bereits vorhandene Vergebührungsplattform der Telekommunikationsschnittstelle des Endgeräts ME beispielsweise in Form gebührenpflichtigen SMS-Nachrichten durchgeführt werden, wodurch sich eine Vergebührung ohne zusätzliche Registrierung über dem mobilen Telekommunikationsendgerät zugeordnete Vergebührungssyste, d.h. beispielsweise der Telefonrechnung, durchgeführt werden kann. Dadurch ergibt sich eine äußerst benutzerfreundliche Abrechnung bei der Vergabe von beispielsweise Zugangsberechtigungen.

Ferner wird z.B. eine Identifikation eines Benutzers über die RFID-Funktionalität des mobilen Telekommunikationsendgeräts und eine Vergebührung wiederum über die Telekommunikationsschnittstelle durchgeführt. Auf diese Weise kann auch eine Bezahlung z.B. in Supermärkten usw. äußerst sicher und zuverlässig realisiert werden, wobei sich die Benutzerfreundlichkeit weiter erhöht.

Zur Realisierung von erhöhten Sicherheitsvorkehrungen kann ferner die RFID-Leseeinheit in Verbindung mit der Dienstanbietereinheit SP stehen, wobei eine Verifizierung der gesendeten RFID-Kennwertdaten über die Telekommunikationsschnittstelle des mobilen Telekommunikationsendgeräts ME und das Kommunikationsnetzwerk N innerhalb der Dienstanbietereinheit SP durch Vergleich der über die unterschiedlichen Verbindungswege übertragenen Kennwertdaten durchgeführt wird. Erst bei Übereinstimmung von beiden Datensätzen wird beispielsweise eine Zugangsberechtigung an der RFID-Leseeinheit erteilt oder eine Vergebührung durchgeführt. Bei einer derartigen Konfiguration sind auch komplexe Sicherheitsvorkehrungen denkbar, wie z.B. die zeitlich bedingte Möglichkeit zum Erzeugen der RFID-Transponder-Funktionalität im Endgerät.

Ferner kann erfindungsgemäß das mobile Telekommunikationsendgerät nicht nur für eine vorbestimmte Art von RFID-Leseeinheiten RL verwendet werden, sondern für eine Vielzahl von unterschiedlichen RFID-Leseeinheiten von unterschiedlichen Dienstanbietern konfiguriert werden. Demzufolge können auch mehrere RFID-Datensätze bestehend aus einem RFID-Aktivierungssignal-Erkennungsalgorithmus, einem RFID-Kennwertdaten-Übertragungsalgorithmus und den RFID-Kennwertdaten in einem mobilen Telekommunikationsendgerät abgelegt werden, wodurch sich auch eine Mehrfach-Verwendbarkeit des mobilen Telekommunikationsendgeräts als modifizierbaren RFID-Transponder ergibt. Demzufolge können beispielsweise gleichzeitig sowohl die Zugangsberechtigungen für ein U-Bahn-System als auch für ein Theater im mobilen Telekommunikationsendgerät abgelegt und somit entsprechende "unterschiedliche" RFID-Transponder emuliert werden, wodurch auch voneinander verschiedene RFID-Leseeinheiten für beispielsweise das U-Bahn-System und das Theater bedient werden können.

Die Übertragung der RFID-Datensätze an das mobile Telekommunikationsendgerät ME können auf unterschiedlichste Art und Weise mittels der ohnehin vorhandenen Telekommunikationsschnittstelle realisiert werden, wobei vorzugsweise jedoch sogenannte SMS- oder MMS-Nachrichten mit gesicherter bzw. verschlüsselter Datenübertragung zum Einsatz kommen.

Figur 2 zeigt nunmehr eine vereinfachte Blockdarstellung von wesentlichen Funktionsblöcken des mobilen Telekommunikationsendgeräts ME gemäß Figur 1, wobei nur geringe Hardware-Modifikationen zur Realisierung der RFID-Funktionalität notwendig sind.

Gemäß Figur 2 besitzt das mobile Telekommunikationsendgerät eine Telekommunikationsschnittstelle 1 zur Unterstützung von beispielsweise einer GSM- oder UMTS-Funkschnittstelle. Es sind jedoch auch weitere Funkschnittstellen wie beispielsweise WLAN, Bluetooth usw. bekannt, über die eine Verbindung zu einem Kommunikationsnetzwerk N realisiert werden kann. Die Telekommunikationsschnittstelle 1 wird in üblicher Weise von einer Datenverarbeitungseinheit 3 des mobilen Endgeräts ME gesteuert, wobei vorzugsweise ein Mikrocontroller verwendet wird. Selbstverständlich können auch alternative Datenverarbeitungseinheiten wie beispielsweise Multiprozessor- oder Mixed-Prozessorsysteme verwendet werden, die im Wesentlichen die Grundfunktionen des mobilen Telekommunikationsendgeräts ME steuern. Zur Realisierung einer Kommunikation mit einem Benutzer weist das mobile Telekommunikationsendgerät ferner eine Benutzerschnittstelle 2 auf, die wiederum von der Datenverarbeitungseinheit 3 angesteuert wird und beispielsweise ein Mikrofon, einen Lautsprecher, eine Anzeigeeinheit sowie eine Tastatur umfasst. Selbstverständlich können auch weitere Funktionseinheiten zur Realisierung einer Benutzer-Ein-/Ausgabe-Funktionalität vorhanden sein. Da alle diese Funktionsblöcke in herkömmlichen mobilen Telekommunikationsendgeräten ohnehin vorhanden sind, ergeben sich wesentliche Kostenersparnisse für die Realisierung einer RFID-Funktionalität bzw. eines RFID-Transponders mittels eines mobilen Telekommunikationsendgeräts.

Gemäß Figur 2 muss demzufolge ein herkömmliches mobiles Telekommunikationsendgerät lediglich um eine RFID-Transponderschaltung 4 ergänzt werden, die unmittelbar an die Datenverarbeitungseinheit 3 angeschaltet ist, wobei die Datenverarbeitungseinheit 3 die RFID-Transponderschaltung 4 unter Verwendung eines Aktivierungs-Erkennungsalgorithmus AEA eines RFID-Kennwertdaten-Übertragungsalgorithmus RÜA und von RFID-Kennwertdaten RKW derart ansteuert, dass in Abhängigkeit von einem von der RFID-Leseeinheit gesendeten RFID-Aktivierungssignals die RFID-Kennwertdaten gemäß dem RFID-Kennwertdaten-Übertragungsalgorithmus gesendet werden. Die RFID-Datensätze AEA, RÜA und RKW sind hierfür in einer RFID-Speichereinheit 5 abgelegt, die beispielsweise einen Teilbereich eines wiederum ohnehin vorhandenen Speichers des mobilen Telekommunikationsendgeräts ME darstellt.

Demzufolge können über die Telekommunikationsschnittstelle 1 die RFID-Datensätze, d.h. der RFID-Aktivierungssignal-Erkennungsalgorithmus, der RFID-Kennwertdaten-Übertragungsalgorithmus und die eigentlichen RFID-Kennwertdaten in die RFID-Speichereinheit 5 geladen werden, wobei die Datenverarbeitungseinheit 3 in Verbindung mit der RFID-Transponderschaltung 4 zunächst eine RFID-Aktivierungssignal-Erkennung emuliert. Hierbei werden die an einem RFID-Eingang I1 der Datenverarbeitungseinheit 3 erfassten Signale ausgewertet und bei einer bestimmten Signalfolge, d.h. der "Aktivierungssignalfolge" als RFID-Aktivierung interpretiert. Sobald eine derartige RFID-Aktivierung von der Datenverarbeitungseinheit 3 erkannt wird, werden unter Verwendung des RFID-Kennwertdaten-Übertragungsalgorithmus RÜA die in der Speichereinheit 5 abgelegten RFID-Kennwertdaten RKW an einem RFID-Ausgang O1 entsprechend ausgegeben. Bei einer bidirektionalen Übertragung können darüber hinaus bei einer derartigen RFID-Übertragung auch weitere Informationen oder Kennwertdaten am RFID-Eingang I1 empfangen werden.

Zur Realisierung einer derartigen RFID-Übertragung bzw. RFID-Aktivierung weist die RFID-Transponderschaltung 4 eine Koppelspule KS als Antennenelement zum Empfangen von elektromagnetischer Strahlung auf, wie sie von der RFID-Leseeinheit RL z.B. in Form eines Aktivierungssignals abgestrahlt wird. Gleichzeitig dient diese Koppelspule KS auch als Sendeantenne zum Senden der RFID-Kennwertdaten RKW an die RFID-Leseeinheit RL. Ferner weist die RFID-Transponderschaltung 4 einen Bandpass BP zur Begrenzung eines Frequenzbereichs und einen Gleichrichter G zum Umwandeln des empfangenen Wechselsignals in ein Gleichspannungssignal auf. Zum Modulieren bzw. zum Erzeugen eines Sendesignals besitzt die RFID-Transponderschaltung ferner ein Schaltelement S, welches wiederum eingangsseitig an einen RFID-Ausgang O1 der Datenverarbeitungseinheit 3 und ausgangsseitig an die Koppelspule KS geschaltet ist.

Genauer gesagt wird gemäß Figur 2 ein Anschluss der Koppelspule KS an Masse gelegt, während ein weiterer Anschluss der Koppelspule KS über den Gleichrichter G und den Bandpass BP mit dem RFID-Eingang I1 der Datenverarbeitungseinheit 3 zum Erfassen des RFID-Aktivierungssignals bzw. der von der RFID-Leseeinheit gesendeten Daten verbunden ist. Andererseits ist der RFID-Ausgang O1 der Datenverarbeitungseinheit 3 mit dem Eingang des Schaltelements S verbunden, wobei ein Anschluss bzw. Ausgang des Schaltelements S an Masse gelegt wird und ein weiterer Anschluss bzw. Ausgang des Schaltelements S mit dem weiteren Anschluss der Koppelspule KS verbunden ist.

Im bevorzugten Ausführungsbeispiel gemäß Figur 2, welches eine sehr einfache und somit kostengünstige Realisierung der Transponderschaltung 4 darstellt, besteht der Bandpass aus einem Kondensator, der mit einem Anschluss an Masse liegt und mit seinem weiteren Anschluss mit dem RFID-Eingang I1 der Datenverarbeitungseinheit 3 verbunden ist. Ferner wird der Gleichrichter G durch eine Diode realisiert, die in Sperrrichtung zwischen dem RFID-Eingang I1 und dem weiteren Anschluss der Koppelspule Ks geschaltet ist. Das Schaltelement S besteht vorzugsweise aus einem Transistor und insbesondere aus einem Bipolar- oder Feldeffekttransistor, wobei die Basis bzw. das Gate an den RFID-Ausgang O1 geschaltet ist und der Kollektor bzw. die Source an Masse liegt, während der Emitter bzw. das Drain wiederum mit dem weiteren Anschluss der Koppelspule KS in Verbindung steht. Erfindungsgemäß kann lediglich mit vier zusätzlichen Bauelementen ein herkömmliches mobiles Telekommunikationsendgerät ME derart modifiziert werden, dass es einen äußerst flexiblen Transponder-Emulator realisiert.

Da RFID-Transponder üblicherweise im Langwellenbereich von 100 bis 135 kHz im HF-Bereich bei 13,56 MHz bzw. 27,125 MHz und im UHF-Bereich bei 400 bis 950 MHz arbeiten, aber auch im Mikrowellenbereich bei 2,45, 5,8 oder 24,125 GHz ein Betrieb durchgeführt wird, kann die RFID-Transponderschaltung zur Erhöhung einer weiteren Flexibilität und insbesondere zur Abdeckung dieser Vielzahl von unterschiedlichen Frequenzbereichen ein Abstimmelement AE zum Abstimmen der Koppelspule KS aufweisen. Vorzugsweise wird als Abstimmelement AE ein elektrisch steuerbarer Abstimmkondensator zwischen die Anschlüsse der Koppelspule KS geschaltet, der über einen RFID-Abstimmausgang O2 des Mikrocontrollers bzw. der Datenverarbeitungseinheit 3 angesteuert werden kann. In Abhängigkeit der RFID-Datensätze im RFID-Speicher 5 kann demzufolge eine Koppelspule bzw. Antenne der Transponderschaltung 4 an jeweilige Frequenzbereiche angepasst werden, wodurch sich äußerst unterschiedliche RFID-Leseeinheiten bedienen lassen und die Flexibilität des mobilen Telekommunikationsendgeräts weiter erhöht ist.

Auf diese Weise können Fahrscheine, Kinokarten, Schipässe, aber auch Mitarbeiter-Identifikationskarten usw. flexibel realisiert und beispielsweise mit einem Ablaufdatum oder mit einer maximalen Anzahl von zulässigen Zutritten versehen werden. Die Zutrittskontrollsysteme bleiben darüberhinaus weiterhin einheitlich für herkömmliche RFID-Transponder bzw. - TAGs verwendbar. Insbesondere zur Realisierung von sicherheitsrelevanten Systemen mit einer zusätzlichen Verifizierung sind keine weiteren Schaltungen und aufwändigen Signalverarbeitungsschritte notwendig, da die ohnehin vorhandenen Funktionalitäten des mobilen Telekommunikationsendgeräts in besonders effektiver Weise verwendet werden können. Auf diese Weise kann mit einem minimalen technischen Mehraufwand bzw. mit einer sehr geringen Modifikation und durch eine nur sehr geringe Mitbenutzung der Rechenleistung der Datenverarbeitungseinheit des mobilen Telekommunikationsendgeräts diese RFID-Zusatzfunktionalität realisiert werden. Ferner entfällt durch die Nahbereichskopplung (z.B. 50 Zentimeter des emulierten RFID-Transponders) die üblicherweise vorhandene Vereinzelungsproblematik bei alternativen Funksystemen.

Die Erfindung wurde vorstehend anhand eines mobilen Telekommunikationsendgeräts in Form eines Handys beschrieben. Sie ist jedoch nicht darauf beschränkt und umfasst auch weitere mobile Telekommunikationsendgeräte.

## Patentansprüche

1. Mobiles Telekommunikationsendgerät mit RFID-Funktionalität mit
einer Telekommunikationsschnittstelle (1) zur Realisierung einer drahtlosen Kommunikation mit einem Kommunikationsnetzwerk (N);
einer Benutzerschnittstelle (2) zur Ein-/Ausgabe von Daten von/an einen Benutzer;
einer Datenverarbeitungseinheit (3) zum Steuern der Telekommunikationsschnittstelle (1), der Benutzerschnittstelle (2) und von Grundfunktionen des mobilen Telekommunikationsendgerätes (ME);
einer RFID-Transponderschaltung (4), die unmittelbar an die Datenverarbeitungseinheit (3) angeschaltet ist, und
einer RFID-Speichereinheit (5) zum Speichern eines Aktivierungssignal-Erkennungsalgorithmus (AEA) zum Erkennen eines RFID-Aktivierungssignals, von RFID-Kennwertdaten (RKW) und eines RFID-Kennwortdaten-Übertragungsalgorithmus (RÜA) zum Übertragen der RFID-Kennwertdaten, wobei
die Datenverarbeitungseinheit (3) die RFID-Transponderschaltung (4) unter Verwendung des Aktivierungssignal-Erkennungsalgorithmus (AEA) und des RFID-Kennwortdaten-Übertragungsalgorithmus (RSA) derart ansteuert, dass in Abhängigkeit vom RFID-Aktivierungssignal die RFID-Kennwertdaten (RKW) gesendet werden und wobei die Datenverarbeitungseinheit dazu eingerichtet ist, unter Verwendung der Algorithmen gemeinsam mit der RFID-Transponderschaltung einen RFID-Transponder-Emulator zu erzeugen.

2. Mobiles Telekommunikationsendgerät nach Patentanspruch 1,
**dadurch gekennzeichnet, dass** die RFID-Transponderschaltung (4) eine Koppelspule (KS), einen Bandpass (BP), einen Gleichrichter (G) und ein Schaltelement (S) aufweist.

3. Mobiles Telekommunikationsendgerät nach Patentanspruch 2,
**dadurch gekennzeichnet, dass** ein Anschluss der Koppelspule (KS) an Masse liegt,
ein weiterer Anschluss der Koppelspule (KS) über den Gleichrichter (D) und den Bandpass (BP) mit einem RFID-Eingang (I1) der Datenverarbeitungseinheit (3) zum Erfassen des RFID-Aktivierungssignals verbunden ist,
ein RFID-Ausgang (O1) der Datenverarbeitungseinheit (3) mit einem Eingang des Schaltelements (S) verbunden ist,
ein Anschluss des Schaltelements (S) an Masse liegt, und
ein weiterer Anschluss des Schaltelements (S) mit dem weiteren Anschluss der Koppelspule (KS) verbunden ist, wobei
die Datenverarbeitungseinheit (3) nach Empfang des RFID-Aktivierungssignals am RFID-Eingang (I1) die RFID-Kennwertdaten am RFID-Ausgang (O1) ausgibt.

4. Mobiles Telekommunikationsendgerät nach Patentanspruch 2 oder 3,
**dadurch gekennzeichnet, dass** der Bandpass (BP) durch einen Kondensator realisiert ist, der mit einem Anschluss an Masse liegt und mit seinem weiteren Anschluss mit dem RFID-Eingang (E1) der Datenverarbeitungseinheit (3) verbunden ist.

5. Mobiles Telekommunikationsendgerät nach einem der Patentansprüche 2 bis 4,
**dadurch gekennzeichnet, dass** der Gleichrichter (G) durch eine Diode realisiert ist, die zwischen den RFID-Eingang (I1) und den weiteren Anschluss der Koppelspule (KS) geschaltet ist.

6. Mobiles Telekommunikationsendgerät nach einem der Patentansprüche 2 bis 5,
**dadurch gekennzeichnet, dass** die RFID-Transponderschaltung (4) ein Abstimmelement (AE) zum Abstimmen der Koppelspule (KS) aufweist.

7. Mobiles Telekommunikationsendgerät nach Patentanspruch 6,
**dadurch gekennzeichnet, dass** das Abstimmelement (AE) mit einem RFID-Abstimmausgang (O2) der Datenverarbeitungseinheit (3) verbunden ist und durch diesen angesteuert wird.

8. Mobiles Telekommunikationsendgerät nach Patentanspruch 6 oder 7,
**dadurch gekennzeichnet, dass** das Abstimmelement (AE) einen elektrisch steuerbaren Abstimmkondensator aufweist.

9. Mobiles Telekommunikationsendgerät nach Patentanspruch 1 bis 8,
**dadurch gekennzeichnet, dass** der Aktivierungssignal-Erkennungsalgorithmus (AEA), die RFID-Kennwertdaten (RKW) und der RFID-Kennwortdaten-Übertragungsalgorithmus über die Telekommunikationsschnittstelle (1) und das Kommunikationsnetzwerk (N) in Abhängigkeit von einer Benutzereingabe ladbar sind.

10. Mobiles Telekommunikationsendgerät nach Patentanspruch 9,
**dadurch gekennzeichnet, dass** die ladbaren RFID-Algorithmen (AEA, RÜA) und RFID-Kennwertdaten (RKW) gesicherte Algorithmen und Daten darstellen.

11. Mobiles Telekommunikationsendgerät nach einem der Patentansprüche 9 oder 10,
**dadurch gekennzeichnet, dass** die ladbaren RFID-Algorithmen (AEA, RÜA) und RFID-Kennwertdaten (RKW) beliebig oft in der RFID-Speichereinheit (5) aktualisiert und/oder gelöscht werden können.

12. Verfahren zur Steuerung eines Kommunikationssystems mit einem mobilen Telekommunikationsendgerät (ME) mit einer RFID-Transponderschaltung nach einem der Patentansprüche 1 bis 11, mit einer RFID-Leseeinheit (RL) zum Senden eines RFID-Aktivierungssignals und zum Lesen der RFID-Kennwertdaten (RKW) des mobilen Telekommunikationsendgeräts (ME),
einem Kommunikationsnetzwerk (N), das mit dem mobilen Telekommunikationsendgerät (ME) in Verbindung steht, und
einer Dienstanbietereinheit (SP), die mit dem Kommunikationsnetzwerk (N) in Verbindung steht und die RFID-Leseeinheit (RL) verwaltet,
**dadurch gekennzeichnet, dass** die Dienstanbietereinheit (SP) einen zur RFID-Leseeinheit (RL) passenden RFID-Aktivierungssignal-Erkennungsalgorithmus (AEA), eine RFID-Kennwertdaten-Übertragungsalgorithmus (RÜA) und RFID-Kennwertdaten (RKW) für das mobile Telekommunikationsendgerät (ME) bereitstellt, wobei die Datenverarbeitungseinheit unter Verwendung der Algorithmen gemeinsam mit der RFID-Transponderschaltung einen RFID-Transponder-Emulator erzeugt.

13. Verfahren nach Patentanspruch 12,
**dadurch gekennzeichnet, dass** beim Bereitstellen der RFID-Algorithmen (AEA, RÜA) und der RFID-Kennwertdaten (RKW) eine Vergebührung durchgeführt wird.

14. Verfahren nach Patentanspruch 12 oder 13,
**dadurch gekennzeichnet, dass** die Dienstanbietereinheit (SO) mit der RFID-Leseeinheit (RL) in Verbindung steht und eine Verifizierung der gesendeten RFID-Kennwertdaten (RKW) über die Telekommunikationsschnittstelle (1) und das Kommunikationsnetzwerk (N) durchführt.

15. Verfahren nach einem der Patentansprüche 12 bis 14,
**dadurch gekennzeichnet, dass** eine Identifikation des Benutzers über die RFID-Transponderschaltung (4) und eine Vergebührung über die Telekommunikationsschnittstelle (1) durchgeführt wird.

## Claims

1. A mobile telecommunications terminal with RFID functionality, comprising
a telecommunications interface (1) for achieving wireless communication with a communications network (N);
a user interface (2) for the input/output of data from/to a user;
a data processing unit (3) for controlling the telecommunications interface (1), the user interface (2), and basic functions of the mobile telecommunications terminal (ME);
an RFID transponder circuit (4) connected directly to the data processing unit (3), and
an RFID memory unit (5) for storing an activation signal recognition algorithm (AEA) for recognizing an RFID activation signal, RFID parameter data (RKW), and an RFID password data transmission algorithm (RUA) for transmission of the RFID parameter data, wherein,
using the activation signal recognition algorithm (AEA) and the RFID password data transmission algorithm (RSA), the data processing unit (3) activates the RFID transponder circuit (4) in such a way that, in response to the RFID activation signal, the RFID parameter data (RKW) are sent, and wherein the data processing unit is configured to generate an RFID transponder emulator, together with the RFID transponder circuit, by using the algorithms.

2. The mobile telecommunications terminal according to claim 1, **characterized in that** the RFID transponder circuit (4) has a coupling coil (KS), a bandpass filter (BP), a rectifier (G), and a switching element (S).

3. The mobile telecommunications terminal according to claim 2, **characterized in that** one lead of the coupling coil (KS) is connected to ground,
another lead of the coupling coil (KS) is connected via the rectifier (D) and the bandpass filter (BP) to an RFID input (I1) of the data processing unit (3) for capturing the RFID activation signal,
an RFID output (O1) of the data processing unit (3) is connected to an input of the switching element (S),
one lead of the switching element (S) is connected to ground, and
another lead of the switching element (S) is connected to the other lead of the coupling coil (KS), wherein
once the data processing unit (3) receives the RFID activation signal at the RFID input (I1), it outputs the RFID parameter data at the RFID output (O1).

4. The mobile telecommunications terminal according to claim 2 or 3, **characterized in that** the bandpass filter (BP) is implemented as a capacitor, which is connected via one lead to ground and is connected via its other lead to the RFID input (E1) of the data processing unit (3).

5. The mobile telecommunications terminal according to any of claims 2 to 4, **characterized in that** the rectifier (G) is implemented as a diode, which is connected between the RFID input (I1) and the other lead of the coupling coil (KS).

6. The mobile telecommunications terminal according to any of claims 2 to 5, **characterized in that** the RFID transponder circuit (4) has a tuning element (AE) for tuning the coupling coil (KS).

7. The mobile telecommunications terminal according to claim 6, **characterized in that** the tuning element (AE) is connected to an RFID tuning output (O2) of the data processing unit (3) and is activated by the same.

8. The mobile telecommunications terminal according to claim 6 or 7, **characterized in that** the tuning element (AE) has an electrically controllable tuning capacitor.

9. The mobile telecommunications terminal according to claims 1 to 8, **characterized in that** the activation signal recognition algorithm (AEA), the RFID parameter data (RKW), and the RFID password data transmission algorithm can be loaded via the telecommunications interface (1) and the communications network (N), in response to a user input.

10. The mobile telecommunications terminal according to claim 9, **characterized in that** the loadable RFID algorithms (AEA, RUA) and RFID parameter data (RKW) are secured algorithms and data.

11. The mobile telecommunications terminal according to either claim 9 or claim 10, **characterized in that** the loadable RFID algorithms (AEA, RUA) and RFID parameter data (RKW) can be updated and/or deleted as needed in the RFID memory unit (5).

12. A method for controlling a communications system that comprises a mobile telecommunications terminal (ME) with an RFID transponder circuit according to any of claims 1 to 11, an RFID reader unit (RL) for sending an RFID activation signal and for reading the RFID parameter data (RKW) of the mobile telecommunications terminal (ME), a communications network (N) connected to the mobile telecommunications terminal (ME), and a service provider unit (SP), which is connected to the communications network (N) and manages the RFID reader unit (RL), **characterized in that** the service provider unit (SP) provides an RFID activation signal recognition algorithm (AEA) that is compatible with the RFID reader unit (RL), an RFID parameter data transmission algorithm (RUA), and RFID parameter data (RKW) for the mobile telecommunications terminal (ME), wherein the data processing unit, together with the RFID transponder circuit, generates an RFID transponder emulator by using the algorithms.

13. The method according to claim 12, **characterized in that** a fee is calculated in connection with the provision of the RFID algorithms (AEA, RUA) and the RFID parameter data (RKW).

14. The method according to claim 12 or 13, **characterized in that** the service provider unit (SO) is connected to the RFID reader unit (RL) and verifies the sent RFID parameter data (RKW) via the telecommunications interface (1) and the communications network (N).

15. The method according to any of claims 12 to 14, **characterized in that** the user is identified via the RFID transponder circuit (4) and a fee is calculated via the telecommunications interface (1).

## Revendications

1. Terminal de télécommunication mobile à fonction RFID avec une interface de télécommunication (1) pour la réalisation d'une communication sans fil avec un réseau de communication (N) ; une interface utilisateur (2) pour l'entrée/sortie de données par/à un utilisateur ;
une unité de traitement de données (3) pour la commande de l'interface de télécommunication (1), de l'interface utilisateur (2) et de fonctions de base du terminal de télécommunication mobile (ME) ;
un circuit de transpondeur RFID (4), qui est activé directement au niveau de l'unité de traitement de données (3), et
une unité de stockage RFID (5) pour le stockage d'un algorithme de détection de signal d'activation (AEA) pour la détection d'un signal d'activation RFID, de données de valeur caractéristique RFID (RKW) et d'un algorithme de transmission de données de mot de passe RFID (RÜA) pour la transmission des données de valeur caractéristique RFID, dans lequel
l'unité de traitement de données (3) commande le circuit de transpondeur RFID (4) en utilisant l'algorithme de détection de signal d'activation (AEA) et l'algorithme de transmission de données de mot de passe RFID (RSA) de sorte qu'en fonction du signal d'activation RFID, les données de valeur caractéristique RFID (RKW) sont envoyées et dans lequel l'unité de traitement de données est aménagée pour générer un émulateur de transpondeur RFID en utilisant les algorithmes conjointement avec le circuit de transpondeur RFID.

2. Terminal de télécommunication mobile selon la revendication 1, **caractérisé en ce que** le circuit de transpondeur RFID (4) présente une bobine de couplage (KS), un passe-bande (BP), un redresseur (G) et un élément de commutation (S).

3. Terminal de télécommunication mobile selon la revendication 2, **caractérisé en ce qu'**un raccordement de la bobine de couplage (KS) se trouve à la masse,
un autre raccordement de la bobine de couplage (KS) est relié par le biais du redresseur (D) et du passe-bande (BP) à une entrée RFID (I1) de l'unité de traitement de données (3) pour la détection du signal d'activation RFID,
une sortie RFID (O1) de l'unité de traitement de données (3) est reliée à une entrée de l'élément de commutation (S),
un raccordement de l'élément de commutation (S) se trouve à la masse, et
un autre raccordement de l'élément de commutation (S) est relié à l'autre raccordement de la bobine de couplage (KS), dans lequel l'unité de traitement de données (3) émet après la réception du signal d'activation RFID à l'entrée RFID (I1) les données de valeur caractéristique RFID à la sortie RFID (O1).

4. Terminal de télécommunication mobile selon la revendication 2 ou 3,
**caractérisé en ce que** le passe-bande (BP) est réalisé par un condensateur, qui se trouve avec un raccordement à la masse, et est relié avec son autre raccordement à l'entrée RFID (E1) de l'unité de traitement de données (3).

5. Terminal de télécommunication mobile selon l'une quelconque des revendications 2 à 4,
**caractérisé en ce que** le redresseur (G) est réalisé par une diode, qui est commutée entre l'entrée RFID (I1) et l'autre raccordement de la bobine de couplage (KS).

6. Terminal de télécommunication mobile selon l'une quelconque des revendications 2 à 5,
**caractérisé en ce que** le circuit de transpondeur RFID (4) présente un élément d'accord (AE) pour l'accord de la bobine de couplage (KS).

7. Terminal de télécommunication mobile selon la revendication 6,
**caractérisé en ce que** l'élément d'accord (AE) est relié à une sortie d'accord RFID (O2) de l'unité de traitement de données (3) et est commandé par celle-ci.

8. Terminal de télécommunication mobile selon la revendication 6 ou 7,
**caractérisé en ce que** l'élément d'accord (AE) présente un condensateur d'accord à commande électrique.

9. Terminal de télécommunication mobile selon la revendication 1 à 8,
**caractérisé en ce que** l'algorithme de détection de signal d'activation (AEA), les données de valeur caractéristique RFID (RKW) et l'algorithme de transmission de données de mot de passe RFID peuvent être chargés par le biais de l'interface de télécommunication (1) et du réseau de communication (N) en fonction d'une entrée d'utilisateur.

10. Terminal de télécommunication mobile selon la revendication 9,
**caractérisé en ce que** les algorithmes RFID (AEA, RÜA) et les données de valeur caractéristique RFID (RKW) pouvant être chargés représentent des algorithmes et des données sécurisés.

11. Terminal de télécommunication mobile selon l'une quelconque des revendications 9 ou 10,
**caractérisé en ce que** les algorithmes RFID (AEA, RÜA) et les données de valeur caractéristique RFID (RKW) pouvant être chargés peuvent être actualisés autant de fois que voulu dans l'unité de stockage RFID (5) et/ou supprimés.

12. Procédé de commande d'un système de communication avec un terminal de télécommunication mobile (ME) avec un circuit de transpondeur RFID selon l'une quelconque des revendications 1 à 11, avec une unité de lecture RFID (RL) pour l'envoi d'un signal d'activation RFID et pour la lecture des données de valeur caractéristique RFID (RKW) du terminal de télécommunication mobile (ME), un réseau de communication (N), qui est en communication avec le terminal de télécommunication mobile (ME), et une unité de fournisseur de services (SP), qui communique avec le réseau de communication (N) et gère l'unité de lecture RFID (RL),
**caractérisé en ce que** l'unité de fournisseur de services (SP) met à disposition un algorithme de détection de signal d'activation RFID (AEA) adapté à l'unité de lecture RFID (RL), un algorithme de transmission de données de valeur caractéristique RFID (RÜA) et des données de valeur caractéristique RFID (RKW) pour le terminal de télécommunication mobile (ME), dans lequel l'unité de traitement de données génère un émulateur de transpondeur RFID en utilisant les algorithmes conjointement avec le circuit de transpondeur RFID.

13. Procédé selon la revendication 12,
**caractérisé en ce qu'**une tarification est réalisée lors de la mise à disposition des algorithme RFID (AEA, RÜA) et des données de valeur caractéristique RFID (RKW).

14. Procédé selon la revendication 12 ou 13,
**caractérisé en ce que** l'unité de fournisseur de services (SO) communique avec l'unité de lecture RFID (RL) et effectue une vérification des données de valeur caractéristique RFID (RKW) envoyées par le biais de l'interface de télécommunication (1) et du réseau de communication (N).

15. Procédé selon l'une quelconque des revendications 12 à 14,
**caractérisé en ce qu'**une identification de l'utilisateur est effectuée par le biais du circuit de transpondeur RFID (4) et une tarification est effectuée par le biais de l'interface de télécommunication (1).
